# EUROPÄISCHE PATENTANMELDUNG

(11) **EP 2 191 989 A1**
(43) Veröffentlichungstag der Anmeldung: **02.06.2010**
(21) Anmeldenummer: 08105893.5
(22) Anmeldetag: 28.11.2008
(51) Int. Cl.: B60G 7/00

(54) **Vierpunktlenker für eine Achsaufhängung eines Nutzfahrzeuges**

(71) Anmelder: Frauenthal Deutschland GmbH, 59229 Ahlen (DE)
(72) Erfinder: Knuts, Konrad, 40547, Düsseldorf (DE); Dahm, Wolfgang, 47877, Willich (DE); Manke, Dr. Lutz, 58097, Hagen (DE); Mertens, Andreas, 58730, Fröndenberg (DE)
(74) Vertreter: Meldau, Gustav

(57) **Zusammenfassung**

Die Erfindung betrifft einen Vierpunktlenker (1) für eine Achsaufhängung einer Starrachse an einem Rahmen eines Nutzfahrzeuges, der von seiner Form her einen H-förmigen Hohlkörper (2) aufweist, wobei der Hohlkörper (2) aus einem oberseitig geformten Blechteil (3) und einem unterseitig geformten Blechteil (4) besteht, und die zwei gleich geformten Blechteile (3) und (4) Schalenelemente (5) und (6) bilden, welche in der Symmetrieebene (7) des Hohlkörpers (2) zusammengefügt und verschweißt sind, und wobei jeweils endseitig an den Armen (8, 9, 10, und 11) des Hohlkörpers (2) ein Lagerauge (12, 13, 14, und 15) befestigt ist. Gemäß der Erfindung weisen die Schalenelemente (5) und (6) Wandbereiche (16.1, 16.2) und (17.1, 17.2) mit Ausnehmungen (18) auf, die im zusammengefügten Zustand der Schalenelemente (5) und (6) schlitzartige Öffnungen (19) und (20) in der Symmetrieebene (7) an den Holkörperwänden (21) und (22) bilden.

## Beschreibung

### Technisches Umfeld

Die Erfindung betrifft einen Vierpunktlenker für eine Achsaufhängung einer Starrachse an einem Rahmen eines Nutzfahrzeuges, der von seiner Form her einen H-förmigen Hohlkörper umfasst, wobei der Hohlkörper aus einem oberseitig geformten Blechteil und einem unterseitig geformten Blechteil besteht, und die zwei gleich geformten Blechteile Schalenelemente bilden, welche in der Symmetrieebene des Hohlkörpers zusammengefügt und verschweißt sind, und wobei jeweils endseitig an den Armen des Hohlkörpers ein Lagerauge befestigt ist.

### Stand der Technik

Vierpunktlenker der gattungsgemäßen Art haben vornehmlich ihren Einsatz bei Lastkraftwagen und anderen Nutzfahrzeugen. Sie erfüllen eine Anzahl von Funktionen und Aufgaben, für die zuvor eine Mehrzahl von Bauelementen im Bereich der Achsführung und Achsaufhängung notwendig waren. Bei dem Vierpunktlenker von dem die Erfindung ausgeht, erfüllt dieser all diese Funktionen und Aufgaben lediglich durch den Einsatz eines Bauteils. Durch den Einsatz eines derartigen Vierpunktlenkers entfällt die Notwendigkeit zusätzlicher Querstabilisatoren zur Wankstabilisierung des Fahrzeugaufbaus, da der Vierpunktlenker, beispielsweise zusammen mit den vorhandenen Lenkern, sowohl die Aufgabe der Achsführung in Quer- und Längsrichtung, als auch die Aufgabe der Momentenabstützung und der Querstabilisierung übernimmt. Auf diese Weise wird der konstruktive Aufwand minimiert, wobei auch Fahrzeuggewicht eingespart wird, was zu reduzierten Kosten bei der Herstellung, dem Betrieb und der Wartung des Nutzfahrzeuges führt. Da die Querstabilisierung durch den Vierpunktlenker nicht wie beim Torsionsstab zumeist hinter der Fahrzeugachse erfolgt, sondern vielmehr mittels Krafteinleitung in den Fahrzeugrahmen, und hier im Bereich vor der Fahrzeugachse, benötigt das Fahrzeug zudem ggf. auch eine verstärkte Schlusstraverse zur Aufnahme der Wankmomente. Dies führt zu zusätzlichen Kostenreinsparungen und Gewichtsreduzierungen.

Aufgrund dieser vorteilhaften Eigenschaften hat sich der Vierpunktlenker durchgesetzt, wobei aus Gründen der Fertigungstechnik sowie aus Kostengründen und des geringen Bauteilgewichtes heute zumeist die X-Bauform bzw. die H-Bauform bevorzugt wird, die sich im Bereich der Schwerlastfahrzeuge äußerst rasch durchgesetzt und verbreitet hat.

So ist aus der EP 1 057 665 eine Achsaufhängung für Starrachsen in Fahrzeugen bekannt, wobei dieser vor bekannte Vierpunktlenker als Mehrfachlenker und als Stabilisierungseinrichtung aus einem einstückigen Bauteil besteht. Dabei ist der Vierpunktlenker in Form eines im Wesentlich geschlossenen Flächentragwerk mit definierter Verbindungskennlinie ausgebildet, wobei das Flächentragwerk eine verwindbare Rahmenkonstruktion mit einem in sich geschlossenen Rahmenprofil und dazwischen angeordneten Rippen aufweist. Die Konstruktion des Vierpunktlenkers zeichnet sich hierbei dadurch aus, dass zwischen den vier Augen eine Rahmenkonstruktion vorgesehen ist, die als Rohr- oder auch Gelenkarme ausgebildet sein können, so dass sich ein Flächentragwerk bildet, welches durch eine Verrippung noch versteift wird. Auch kann die Versteifung bei dieser aus dem Stand der Technik bekannten Ausführung durch eine in sich geschlossene plattenförmige Verbindung erfolgen.

Eine weitere Ausführungsform des Standes der Technik wird in der WO 2005/092645 A1 offenbart, wobei dieser Ausführungsform eigen ist, dass der Vierpunktlenker als ein durch die Lageraugen definiertes Viereck bzw. trapezförmiges, einstückiges tordierbares Hohlgehäuse ausgebildet ist, welches mehrseitig von offenen Rohren mit im Wesentlichen abgerundeten rechteckigen bis O-förmigen Querschnitten als Wandbereiche ausgebildet ist. Aufgrund dieser Ausbildung soll der Vierpunktlenker einfach mit ausgezeichneter Reproduzierbarkeit und gleichzeitig kostengünstiger Herstellung zu fertigen sein, er soll weiterhin den wünschenswerten Leichtbau am Fahrzeug ermöglichen, wobei der Vierpunktlenker gezielt mit hervorragend mechanischer Eigenschaft bei gleichzeitig verringertem Gewicht prozesssicher sowie kostengünstig herzustellen sein soll. Dabei sind die Einbindungen von offenen Rohrelementen in dem Vierpunktlenker dazu bestimmt, dass nach Querschnittsform und Querschnittsgröße besonders hohe axial und/oder polare Flächenträgheitsmomente bzw. hohe Widerstandsmomente gegenüber Wanktorsionen gegeben sind.

Diese Konstruktion lehnt sehr stark an die vorher diskutierte EP 1 057 665 an, wobei gegenüber der Vordiskutierten diese Ausführungsform offene Rohrsegmente, die die Augen miteinander verbinden, unter Schutz stellen soll.

Aus dem Stand der Technik sind weitere Vierpunktlenkerausführungen bekannt, die H- bzw. X-förmig geformte Hohlkörperkonstruktionen umfassen, wobei diese aus geformten Blechteilen bestehen, die in der Symmetrieebene des Vierpunktlenkers zusammengefügt bzw. verschweißt sind. Die Erfindung geht insbesondere von diesen vorbekannten Ausführungen des Standes der Technik aus, wobei hier zunächst auf die EP 1 336 514 zu verweisen ist, die ebenfalls einen Vierpunktlenker zur Anbindung einer Starrachse an den Rahmen eines Fahrzeugs offenbart. Gegenstand dieser Offenbarung ist ein Vierpunktlenker, der aus einem X-förmigen Hohlkörper besteht, an dessen Armen Lageraugen angeordnet sind. Der Hohlkörper wird durch eine Deckplatte und eine Bodenplatte, die jeweils einteilig oder mehrteilig ausgeführt sein kann, gebildet. Dabei weisen die von den Lageraugen aus beginnend zur Mitte des Hohlkörpers angeformten Arme zunehmende Querschnitte auf. Auf diese Weise wird eine Art Kastenprofil für einen Vierpunktlenker bereitgestellt, der ebenfalls die oben näher beschriebenen Querstabilisierungen und Wankstabilisierungen zwischen Fahrzeugaufbau und Starrachse gewährleisten soll. Diese Art Vierpunktlenker sind aufgrund von verwendeten geformten Blechteilen günstig herzustellen, wobei ihr wesentlicher Vorteil in der Gewichtseinsparung, gegenüber den bereits oben näher diskutierten Druckschriften, liegt. Denn bei den beiden erstgenannten Ausführungen eines Vierpunktlenkers handelt es sich um Vierpunktlenker, die im Wesentlichen aus geschmiedeten Teilen aufgebaut sind.

Eine weitere Ausführungsform des Standes der Technik gemäß der EP 1 557 301, beschreibt hier einen weiteren Vierpunktlenker in Hohlkörperbauweise, der von seiner Grundform ebenfalls eine Kastenform umfasst. Die Grundform des Hohlkörpers nimmt hier eine H-Form ein. Der vor bekannte Vierpunktlenker zeichnet sich dadurch aus, dass der Hohlkörper an dem die Lageraugen befestigt sind, aus Blechteilen besteht, die identisch geformt und gepresst sind, und dabei Halbschalen bilden, die in einer mittleren Symmetrieebene des Hohlkörpers zusammengeschweißt sind. Dadurch soll der Herstellungsaufwand wesentlich reduziert werden und die Schweißnähte mit einfacher Geometrie in hoher Qualität herzustellen sein. Die beiden im Pressvorgang hergestellten gleichen Halbschalen werden erst nach dem Umformgang vergütet. Zur Erleichterung des Pressvorgangs können die Halbschalen mit maximalen Ausrundungsradien gestaltet sein. Die Deckflächen können eben oder zumindest leicht bombiert sein, wobei die Gesamtform der Schalen ausgehend von einer Optimalstruktur an Fertigungsbedingungen angepasst sein können. Die Verschweißung der Halbschalen in der Mittel- bzw. Symmetrieebene des Hohlkörpers erfolgt vorzugsweise mit einer I- oder V-Naht. Dabei erfolgt die Verschweißung der Halbschalen über die gesamte Symmetrieebene des Hohlkörpers, so dass sich ein geschlossener Kasten ergibt.

Ausgehend von dieser letztgenannten Ausführung des Standes der Technik wird es als nachteilig angesehen, dass der als Hohlkörperkasten ausgebildete Vierpunktlenker bei der Querstabilisation bzw. bei der Wankstabilisation, durch die Torsionsmomente in den Hohlkörper des Vierpunktlenkers eingeleitet werden, Spannungen im Bereich der Symmetrieebene abgefangen werden müssen, wo sich die Schweißnähte befinden. Daher ist es unbedingt erforderlich, um den Hohlkörper die hinreichende Stabilität zu geben, dass die qualitative Ausführung der Schweißnähte im Bereich der Symmetrieebene gegeben sein muss. Daher ist es unumgänglich die Verschweißung der Halbschalen im vergüteten und unvergüteten Zustand mit dem Ziel höchstmöglicher Genauigkeit und Betriebsfestigkeit im Schweißnahtbereich durchzuführen.

### Aufgabe

Der Erfindung stellt sich somit das Problem, einen Vierpunktlenker der eingangs genannten Art derart weiter zu bilden, der einerseits die geschilderten Nachteile überwindet, und wobei andererseits der als Hohlkörper ausgebildete Vierpunktlenker hier Wechselbelastungen bezüglich der Querstabilisierung und der Wankstabilisierung auffängt, ohne dass dadurch die Kastenform beeinträchtigt wird, und wobei zusätzlich der Vorteil erreicht werden soll, dass der Vierpunktlenker in seiner Ausgestaltung leicht bauend und in seiner Fertigung günstiger ausgeführt ist.

### Lösung

Erfindungsgemäß wird dieses Problem durch den Hauptanspruch gelöst. Vorteilhafte Ausgestaltungen der Erfindung ergeben sich aus den Unteransprüchen.

Die mit der Erfindung erreichten Vorteile bestehen darin, dass dort, wo bei dem erfindungsgemäßen Vierpunktlenker Spannungen auftreten, eine Verbindung zwischen den beiden sich ineinander bewegenden Teilen nicht vorhanden ist. Denn infolge der beiden sich gegeneinander verwindenden Teile, die den Hohlkörperkasten bilden, werden die Quer- und Wankkräfte durch die obere und untere geformte Schale aufgefangen. Es wird sogar zugelassen, dass die beiden Teile eine Relativbewegung zueinander ausführen, wobei die Bewegbarkeit nicht über Festverbindungen unterdrückt wird, wie im Stand der Technik durch die Schweißverbindungen. Den auftretenden Scherkräften werden bei der erfindungsgemäßen Ausführung die Angriffsflächen genommen, weil im zusammengefügten Zustand der Schalenelemente insbesondere schlitzartige Öffnungen in der Symmetrieebene an den Hohlkörperwänden vorgesehen sind. Dabei sind die Ausnehmungen in den seitlichen Wandbereichen der Schalenelemente angeordnet, zur Bildung von seitlich am Hohlkörper angeordneter Öffnungsschlitze. Diese Öffnungsschlitze übertragen keine Scherkräfte von der einen zur anderen Schale. Es wird somit eine offene Kastenbauweise bereitgestellt, die den auftretenden Lastbewegungen eines Vierpunktlenkers quasi wie ein Torsionsmoment aufnehmenden Federelementes gerecht wird.

Nach einer zweckmäßigen Ausgestaltung der Erfindung erstrecken sich die Ausnehmungen in den seitlichen Wandbereichen der Schalenelemente bis in die Armbereiche hinein. Somit werden die auftretenden Scherkräfte auf einen kleinen Bereich im Bereich der Augen reduziert, so dass die Torsionssteifigkeit des Vierpunktlenkers hauptsächlich durch die beiden parallel angeordneten, plattenförmigen Schalenelemente aufgefangen wird. Hierbei erstrecken sich die seitlichen Ausnehmung im Armbereich über die Hälfte der Armlänge hinweg.

In vorteilhafter Weiterbildung der Erfindung weisen die Wandbereiche der Schalenelemente an den freien Enden der Arme jeweils vierteilkreisförmige Ausnehmungen zur Einbindung der Lageraugen zwischen den Armen der Schalenelemente auf. Somit wird erreicht, dass die Lageraugen nicht als angesetzte Elemente fungieren, sondern hier bei der erfindungsgemäßen Ausführungsform mit in den offenen Hohlkörper eingebunden sind, wobei die Kraft aufnehmenden Flächenbereiche der Arme sich bis über die Lageraugen hin erstrecken.

In Weiterbildung der Erfindung verlaufen die seitlichen Wandbereiche unter einem stumpfen Winkel. Somit wird durch die Einschnürung des Vierpunktlenkers im Mittelbereich die Gewichtseinsparung begünstigt. Nach einer zweckmäßigen Ausgestaltung verlaufen die stirnseitigen Wandbereiche der Schalenelemente bogenförmig und/oder halbkreisförmig. In diesem Bereich treten weniger Torsionsspannungen auf, so dass in diesem Bereich die hochfeste Verbindung zwischen den Schalenelementen vorgenommen wird. Es versteht sich von selbst, dass dabei die Schalenelemente mit einer I- oder V-Naht verschweißt sein können.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: einen Vierpunktlenker gemäß der Erfindung in der perspektivischen Darstellung;
- Figur 2: eine Seitenansicht des Vierpunktlenkers gemäß der Fig. 1;
- Figur 3: eine geschnittene Draufsicht auf den Vierpunktlenker gemäß der Schnittlinie III - III in Fig. 2; und
- Figur 4: eine weitere Darstellung des Vierpunktlenkers gemäß der Fig. 1 in explosionsartiger Darstellung.

### Ausführungsbeispiele

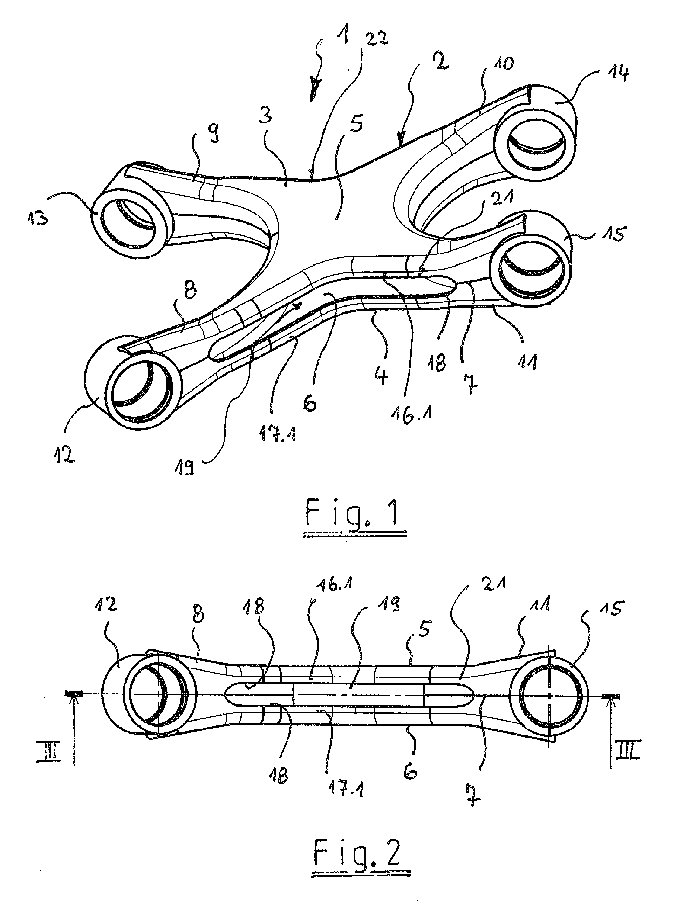

Die Figur 1 zeigt in der perspektivischen Darstellung einen Vierpunktlenker 1 für eine nicht näher dargestellte Achsaufhängung einer Starrachse an einem Rahmen eines Nutzfahrzeuges. Der Vierpunktlenker 1 weist hierbei von seiner Form her einen H-förmigen Hohlkörper 2 auf, wobei der Hohlkörper 2 aus einem oberseitig geformten Blechteil 3 und einem unterseitig geformten Blechteil 4 besteht. Dabei bilden die zwei gleich geformten Blechteile 3 und 4 Schalenelemente 5 und 6, welche in der Symmetrieebene 7 des Hohlkörpers 2 zusammengefügt und verschweißt sind. Wie aus den Figuren 1 bis 4 zu erkennen ist, sind jeweils endseitig an den Armen 8, 9, 10 und 11 des Hohlkörpers 2 Lageraugen 12, 13, 14 und 15 befestigt. Diese stellen die Verbindung zwischen der Starrachse und dem Rahmen des Nutzfahrzeuges her.

Die Schalenelemente 5 und 6 weisen Wandbereiche 16.1, 16.2 bzw. 17.1 und 17.2 auf, die mit Ausnehmungen 18 versehen sind. Dabei bilden die Schalenelemente 5 und 6 im zusammengefügten Zustand schlitzartige Öffnungen 19 und 20, wie sie insbesondere in der Zusammenschau der Figuren 1, 2 und 3 zu erkennen sind, die in der Symmetrieebene 7 an den Hohlkörperwänden 21 und 22 vorhanden sind.

In vorteilhafter Weise sind die Ausnehmungen 18 in den seitlichen Wandbereichen 16.1, 16.2 bzw. 17.1, 17.2 der Schalenelemente 5 und 6 angeordnet zur Bildung der seitlich am Hohlkörper 2 angeordneten Öffnungsschlitze 19 und 20. Wie aus den Figuren 1 und 2 zu erkennen ist, erstrecken sich die Ausnehmungen 18 in den seitlichen Wandbereichen 16.1, 16.2 bzw. 17.1, 17.2 der Schalenelemente 5 und 6 bis in die Armbereiche 23, 24, 25 und 26, wobei sich die seitlichen Ausnehmungen 18 im Armbereich 23, 24, 25 bzw. 26 über die Hälfte der Armlänge hin erstrecken.

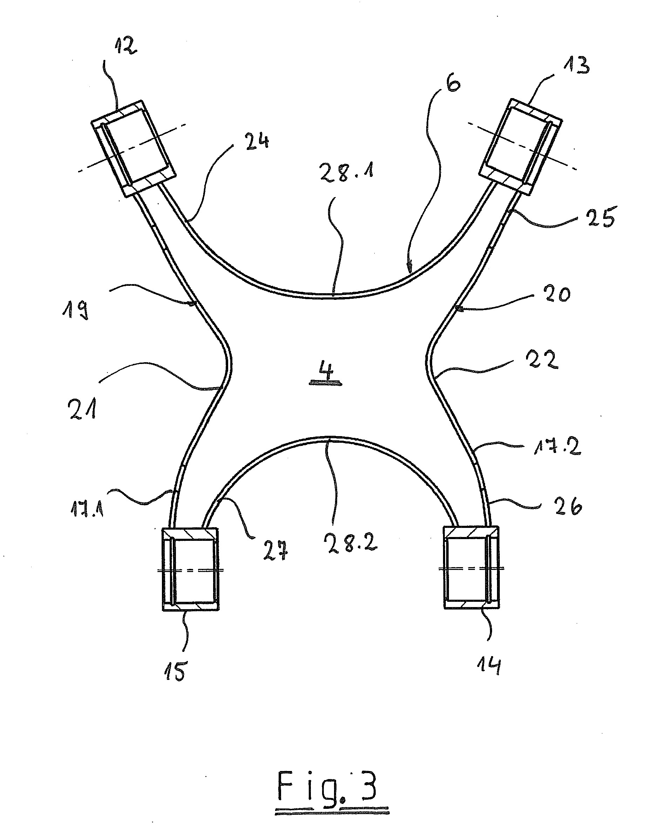

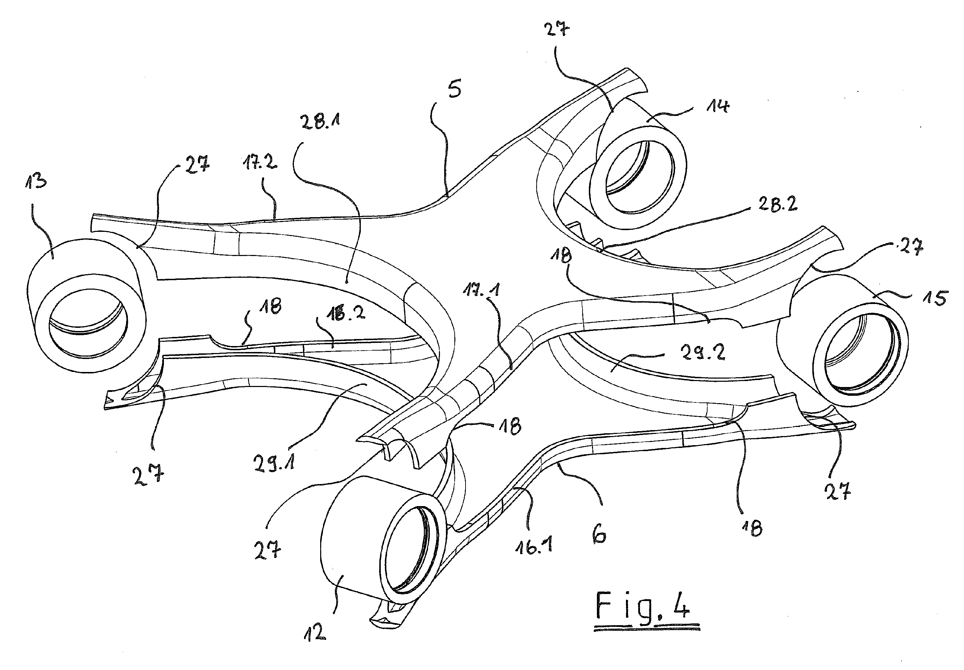

Nach einer besonders vorteilhaften Ausgestaltung der Erfindung, wie dies in der Figur 4 in der explosionsartigen Darstellung zu erkennen ist, weisen die Wandbereiche 16.1, 16.2 bzw. 17.1, 17.2 der Schalenelemente 5 und 6 an den freien Enden der Arme 8, 9, 10, und 11 jeweils viertelkreisförmige Ausnehmungen 27 auf, die insbesondere zur Aufnahme bzw. zur Einbindung des jeweiligen Lagerauges 12, 13, 14, bzw.15 zwischen den Armen 8, 9, 10, und 11 der Schalenelemente 5 und 6 bestimmt sind. Somit werden die Lageraugen 12, 13, 14, und 15 in die Hohlkörperkastenform mit integriert. Weiter ist aus der Figur 3 zu erkennen, dass die seitlichen Wandbereiche 16.1, 16.2 bzw. 17.1, 17.2 unter einem stumpfen Winkel verlaufen. Somit ergibt sich im Mittelbereich des Hohlkörpers 2 eine Einschnürung, die insbesondere das Gewicht des Vierpunktlenkers 1 begünstigend beeinflusst.

Um dem Hohlkörper 2 die hinreichende Stabilität zu geben, verlaufen die stirnseitigen Wandbereiche 28.1, 28.2 und 29.1, 29.2 der Schalenelemente 5 und 6 bogenförmig und/oder halbkreisförmig, wie dies aus der Figur 3 in der Draufsicht zu erkennen ist. In diesem Bereich ist die Hauptanbindung der beiden Schalenelemente 5 und 6 zueinander, wobei sich noch Teilbereiche im Armbereich erstrecken, so dass die Lageraugen 12, 13, 14, und 15 zumindest zur Hälfte von dem Hohlkörper 2 eingebunden werden. Dabei sind die Schalenelemente 5 und 6 mit einer I- oder V-Naht verschweißt.

### Bezugszeichenliste

- 1: Vierpunktlenker
- 2: Hohlkörper
- 3: Blechteil oben
- 4: Blechteil unten
- 5: Schalenelement oben
- 6: Schalenelement unten
- 7: Symmetrieebene
- 8: Arm
- 9: Arm
- 10: Arm
- 11: Arm
- 12: Lagerauge
- 13: Lagerauge
- 14: Lagerauge
- 15: Lagerauge
- 16.1: Wandbereich oben
- 16.2: Wandbereich unten
- 17.1: Wandbereich oben
- 17.2: Wandbereich unten
- 18: Ausnehmung
- 19: Öffnung schlitzartig
- 20: Öffnung schlitzartig
- 21: Hohlkörperwand
- 22: Hohlkörperwand
- 23: Armbereich
- 24: Armbereich
- 25: Armbereich
- 26: Armbereich
- 27: Ausnehmung
- 28.1: stirnseitiger Wandbereich
- 28.2: stirnseitiger Wandbereich
- 29.1: stirnseitiger Wandbereich
- 29.2: stirnseitiger Wandbereich

## Patentansprüche

1. Vierpunktlenker (1) für eine Achsaufhängung einer Starrachse an einem Rahmen eines Nutzfahrzeuges, der von seiner Form her einen H-förmigen Hohlkörper (2) aufweist, wobei der Hohlkörper (2) aus einem oberseitig geformten Blechteil (3) und einem unterseitig geformten Blechteil (4) besteht, und die zwei gleich geformten Blechteile (3) und (4) Schalenelemente (5) und (6) bilden, welche in der Symmetrieebene (7) des Hohlkörpers (2) zusammengefügt und verschweißt sind, und wobei jeweils endseitig an den Armen (8, 9, 10, und 11) des Hohlkörpers (2) ein Lagerauge (12, 13, 14, und 15) befestigt ist,
**dadurch gekennzeichnet,**
**dass** die Schalenelemente (5) und (6) Wandbereiche (16.1, 16.2) und (17.1, 17.2) mit Ausnehmungen (18) aufweisen, die im zusammengefügten Zustand der Schalenelemente (5) und (6) schlitzartige Öffnungen (19) und (20) in der Symmetrieebene (7) an den Holkörperwänden (21) und (22) bilden.

2. Vierpunktlenker nach Anspruch 1,
**dadurch gekennzeichnet,**
**dass** die Ausnehmungen (18) in den seitlichen Wandbereichen (16.1, 16.2) und (17.1, 17.2) der Schalenelemente (5) und (6) angeordnet sind zur Bildung von seitlich am Hohlkörper (2) angeordneter Öffnungsschlitze (19) und (20).

3. Vierpunktlenker nach Anspruch 2,
**dadurch gekennzeichnet,**
**dass** sich die Ausnehmungen (18) in den seitlichen Wandbereichen (16.1, 16.2) und (17.1, 17.2) der Schalenelemente (5) und (6) bis in die Armbereiche (23, 24, 25 und 26) erstrecken.

4. Vierpunktlenker nach Anspruch 3,
**dadurch gekennzeichnet,**
**dass** sich die seitlichen Ausnehmungen (18) im Armbereich (23, 24, 25 und 26) über die Hälfte der Armlänge erstrecken.

5. Vierpunktlenker nach Anspruch 4,
**dadurch gekennzeichnet,**
**dass** die Wandbereiche (16.1, 16.2) und (17.1, 17.2) der Schalenelemente (5) und (6) an den freien Enden der Arme (8, 9, 10 und 11) jeweils viertelkreisförmige Ausnehmungen (27) zur Einbindung der Lageraugen (12, 13, 14 und 15) zwischen den Armen (8, 9, 10 und 11) der Schalenelemente (5) und (6) aufweisen.

6. Vierpunktlenker nach Anspruch 5,
**dadurch gekennzeichnet,**
**dass** die seitlichen Wandbereiche (16.1, 16.2) und (17.1, 17.2) unter einem stumpfen Winkel verlaufen.

7. Vierpunktlenker nach Anspruch 6,
**dadurch gekennzeichnet,**
**dass** die stirnseitigen Wandbereiche (28.1, 28.2) und (29.1, 29.2) der Schalenelemente (5) und (6) bogenförmig und/oder halbkreisförmig verlaufen.

8. Vierpunktlenker nach Anspruch 1 bis 7,
**dadurch gekennzeichnet,**
**dass** die Schalenelemente (5) und (6) mit einer I- oder V-Naht verschweißt sind.
